# EUROPÄISCHE PATENTSCHRIFT

(11) **EP 1 967 424 B1**
(45) Veröffentlichungstag und Bekanntmachung des Hinweises auf die Patenterteilung: **10.11.2010**
(21) Anmeldenummer: 07103896.2
(22) Anmeldetag: 09.03.2007
(51) Int. Cl.: B60R 25/02

(54) **Motorisierte Lenkverrieglungsvorrichtung**
Motorised Steering lock
Verrou de direction motorisé

(43) Veröffentlichungstag der Anmeldung: 10.09.2008
(73) Patentinhaber: Valeo Sicherheitssysteme GmbH, 85253 Erdweg (DE)
(72) Erfinder: Schnittker, Eckhard c/o Valeo Sécurité Habitacle, Europarc 94042 Creteil Cedex (FR); Otto, Andreas c/o Valeo Sécurité Habitacle, Europarc 94042 Creteil Cedex (FR)
(74) Vertreter: Jacquot, Ludovic R. G.

(56) Entgegenhaltungen:
- DE-A1- 10 356 660
- DE-A1- 19 962 587

## Beschreibung

Die Erfindung bezieht sich auf eine motorisierte Lenkverrieglungsvorrichtung für ein Kraftfahrzeug.

Zur Lenkverrieglung eines Kraftfahrzeuges sind in den letzten Jahren motorisierte Lenkverrieglungsvorrichtungen entwickelt worden, welche sich gegenüber den rein mechanischen Lenkradverrieglungen großer Beliebtheit erfreuen.

Wohingegen mechanische Lenkverrieglungen immer in der Nähe des Zündschlosses angebracht werden müssen, können motorisierte Lenkverrieglungen an beliebiger Stelle an der Lenksäule, z. B. in der Nähe des Fußraumes eines Fahrers angebracht werden.

Dies bietet nicht nur den Vorteil, dass der Bauraum um die Lenksäule herum optimiert genutzt werden kann, sondern erhöht auch die Fahrersicherheit im Falle eines Unfalls, da das Lenkschloss nicht mehr im Kniebereich des Fahrers angeordnet ist.

Eine solche motorisierte Lenkverrieglungsvorrichtung wird zum Beispiel in den Patentschriften DE 199 06 302 oder DE 199 06 267 im Namen der Anmelderin oder DE-19962587 beschrieben. Solche Lenkverrieglungsvorrichtungen umfassen eine motorisierte Einheit, z.B. einen Elektromotor, welche über eine Getriebeeinheit den Sperrbolzen, der in eine Ausnehmung der Lenksäule zur Verrieglung einfährt, ansteuert.

In der DE 199 06 267 wird der Sperrbolzen über einen Spindelantrieb mit einem Mitnehmer gesteuert. Dabei liegen der Sperrbolzen, der Mitnehmer und der Spindelantrieb in Reihe, und bestimmen so die Bauhöhe der gesamten Lenkverrieglungsvorrichtung.

Aufgabe der vorliegenden Erfindung ist es die Bauhöhe der bekannten motorisierten Lenkverrieglungseinrichtungen zu verringern, um den Bauraum um die Lenksäule herum weiterhin optimieren zu können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die erfindungsgemäße motorisierte Lenkverrieglungseinrichtung kennzeichnet sich dadurch aus, dass der Sperrbolzen einen seitlich verlaufenden und parallel zum Sperrbolzen endenden, einteilig mit dem Sperrbolzen gefertigten Fortsatz aufweist, der mit einer seitlich zum Sperrbolzen angeordneten und durch den Motor angetriebenen Steuerkurve der Antriebseinheit kooperiert, um den Sperrbolzen durch eine Hubbewegung von der Verrieglungsstellung in die Ruhestellung zu überführen.

Dadurch kann eine besonders flache Bauweise der motorisierten Lenkverrieglungseinrichtung erreicht werden. Desweiteren, ist ein zusätzliches Adapterteil durch die direkte Ansteuerung des Sperrbolzens nicht mehr notwendig. Die einteilige Ausführung verringert somit die Anzahl der Bauteile, was kostenmäßige Vorteile bietet und den Zusammenbau in der Endmontage beschleunigt. Es ist damit auch eine direkte Materialkompatibilität erreicht, so dass etwaige Umwelteinflüsse, wie zum Beispiel Temperaturschwankungen, sich nicht mehr negativ auswirken können. Die einteilige Ausbildung erlaubt auch eine optimierte Kraftübertragung von der Antriebseinheit auf den Sperrbolzen.

Weitere erfindungsmäßige Merkmale und Vorteile ergeben sich aus den folgenden, anhand von Figuren erläuterten Ausführungsbeispielen. Es zeigen:
- Figur 1 ist eine seitliche Perspektivansicht der wesentlichen Bauteile der erfindungsgemäßen motorisierten Lenkverrieglungsvorrichtung,
- Figur 2 zeigt ein Detail der Figur 1 mit leicht verändertem Perpektivwinkel,
- Figur 3 zeigt eine perspektivische Draufsicht der erfindungsgemäßen Verrieglungseinrichtung,
- Figur 4 zeigt einen Querschnitt durch eine Variante eines erfindungsgemäßen Zahnrades, und
- Figur 5 zeigt eine weitere Fortbildung des Sperrbolzens für die erfindungsgemäße Verrieglungseinrichtung.

Die Erfindung wird im Folgenden anhand der beigefügten Figuren näher beschrieben. In den Figuren werden gleiche Bauteile mit gleichen Referenzzeichen gekennzeichnet.

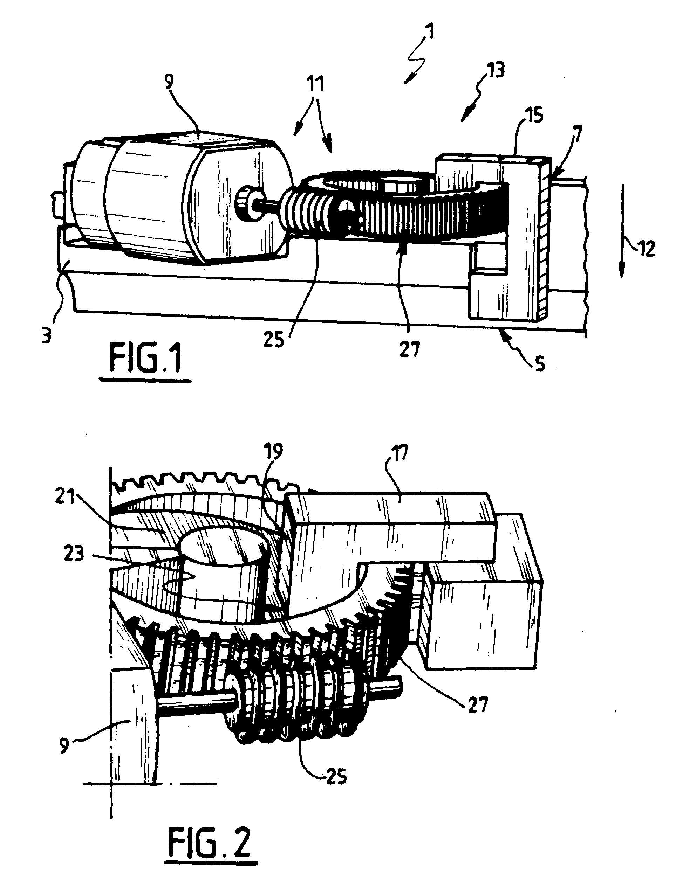

Die Figuren 1 bis 3 zeigen einen Teil einer motorisierten Lenkverrieglungseinrichtung 1 für ein Kraftfahrzeug, welches in einem, nur teilweise dargestellten Gehäuse 3 aufgenommen ist.

Diese Lenkungsverrieglungsvorrichtung umfasst einen Sperrbolzen 5, der in eine entsprechende Ausnehmung an der Lenkspindel (nicht dargestellt in den Figuren) zur Verrieglung des Lenkrads eines Kraftfahrzeugs eingreifen kann. Der Sperrbolzen ist beweglich in einer Führung 7 angeordnet, so dass er eine Translationsbewegung ausführen kann.

Die Bewegung des Sperrbolzens wird, zumindest beim Herausziehen aus der Ausnehmung an der Lenkspindel, das heißt zumindest aus einer die Lenkspindel blockierenden Verrieglungsstellung in eine nicht blockierende Ruhestellung, von einer einen Motor 9 umfassenden Antriebseinheit 11 gesteuert.

Zum Einrasten des Sperrbolzens in die Ausnehmung ist zum Beispiel unterstützend eine nicht dargestellte Feder vorgesehen, welche auf den Sperrbolzen in Richtung (Pfeil 12) der Verrieglungsstellung wirkt.

Erfindungsgemäß weist der Sperrbolzen 5 einen seitlich verlaufenden und parallel zum Sperrbolzen endenden, einteilig mit dem Sperrbolzen gefertigten Fortsatz 13 auf. Vorteilhafterweise wird dieser Fortsatz 13, wie in den Figuren dargestellt, als U-förmig ausgebildetes Ende 15 des Sperrbolzens ausgeführt mit einer quer verlaufenden Basis 17 und einem freien Schenkel 19, der parallel zur Längsrichtung des Sperrbolzens 5 verläuft.

Dieser freie Schenkel 19 kooperiert mit einer durch den Motor 9 angetriebenen Steuerkurve 21, die seitlich zum Sperrbolzen angeordnet ist, um den Lenkbolzen durch eine Hubbewegung von der Verrieglungsstellung in die Ruhestellung zu überführen.

Dabei liegt das freie Ende 23 des Schenkels 19 auf der Steuerkurve 21, wobei der Kontakt durch die nicht dargestellte, auf die Basis 17 wirkende Feder gewährleistet wird.

Vorteilhafterweise wird die Steuerkurve 21 als Rampe ausgeführt.

Wie in den Figuren dargestellt kann die Rampe 21 helixmäßig oder spiralförmig verlaufen und über einen Umfang von weniger als 360° ausgeführt sein.

Sehr effizient und Platz sparend wird die helixförmige Rampe 21 auch dadurch, dass sie im Innenbereich eines vom Motor über eine Schnecke 25 angetriebenen Zahnrads 27 verläuft.

Das Zahnrad 27 ist zum Beispiel aus Kunststoff gefertigt und die helixförmige Rampe im Innenbereich des Zahnrads und das Zahnrad können einteilig ausgeführt sein.

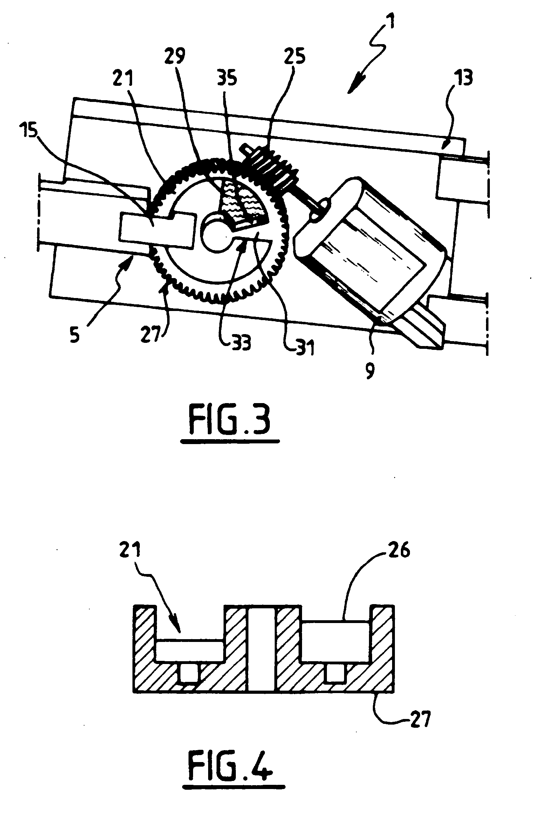

Um jedoch besser einem Reibungsverschleiß vorbeugen zu können ist die helixförmige Rampe 21 im Innenbereich des Zahnrads 27 als ein Einlegeteil 26 ausgeführt, welches in den Innenbereich des Zahnrads 27 eingepasst werden kann (siehe Figur 4). In diesem Fall kann nämlich das Material für das Einlegeteil 26 aus einem härten, reibungsärmeren Material ausgewählt werden.

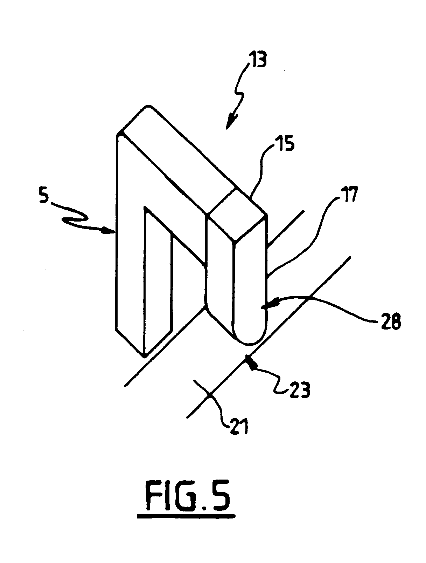

Als Alternative oder auch gleichzeitig kann man vorsehen auf das Ende 23 des Fortsatzes 13 des Sperrbolzens zumindest im Bereich, der im Eingriff mit der Steuerkurve 21 steht, eine Gleitbeschichtung, zum Bespiel aus reibungsarmen Polytetrafluorethylen (Kurzzeichen PTFE), aufzubringen, um die Reibungskräfte zwischen dem Sperrbolzen und der Rampe zu verringern (siehe Figur 5). So ist zum Beispiel vorgesehen diesen Bereich, den freien Schenkel 19, mit einer Reibungskräfte verringernden Kunststoffbeschichtung 28 zu umgeben. Dies kann auch durch Umspritzen mit einem geeigneten Kunststoff erreicht werden.

Kombiniert mit solchen Beschichtungen oder auch als alleinige Maßnahme kann vorgesehen sein das Ende des Fortsatzes (Schenkel 19) des Sperrbolzens zumindest im Bereich, der im Eingriff mit der Steuerkurve steht, abzurunden, um Reibungskräfte zu verringern (siehe Figur 5).

Eine weitere nicht dargestellt Alternative besteht darin, das Ende des Schenkels mit einer in einem Lager gehaltenen Kugel oder eine Rolle auszuführen, die auf der Rampe 21 entlang rollt, wenn der Motor 9 das Zahnrad 27 in Bewegung setzt. Durch diese Maßnahme kann auch die Reibung zwischen der Rampe 21 und dem Sperrbolzen 5 verringert werden.

Die Rampe kann eine gleichmäßige Steigung aufweisen, um zum Beispiel den Sperrbolzen mit nahezu konstanter Geschwindigkeit zu fahren.

Jedoch wird vorzugsweise vorgesehen, dass der Steigungsbereich der Rampe, der das Herausziehen des Sperrbolzens aus der Ausnehmung an der Lenkspindel in der Anfangsphase bewirkt (siehe schraffierter Bereich 29 in Figur 3), flacher verläuft als die Steigungen der restlichen Rampenbereiche. Damit wird bewirkt, dass die aufzubringende Kraft des Motors 9 beim Herausziehen aus der Ausnehmung der Lenkspindel kleiner ist und dass danach die Geschwindigkeit des Sperrbolzens beim Herausziehen beschleunigt wird, so dass das Verhältnis Kraftaufwand / Dauer des Herausziehvorgangs optimiert werden kann.

In einer nicht dargestellten Variante ist vorgesehen, dass die Rampe eine Querneigung zur Unterstützung der seitlichen Führung des Sperrbolzens bei der Aushubbewegung aufweist. Diese Querneigung ist vorteilhafterweise radial nach außen abfallend ausgeführt um auf den Sperrbolzen wirkende Quermomente abzufangen.

Wie in Figur 3 besonders gut ersichtlich, weist die helixförmige Rampe 21 einen sektorförmigen Quersteg 31 auf, dessen eine Seite 33 dem Endanschlag der Ruhestellung und dessen andere Seite 35 dem Endanschlag der Verrieglungsstellung entspricht.

Anstelle des Querstegs 31 kann in diesem Bereich auch eine der übrigen Rampe entgegengesetzte Steigung vorgesehen sein, die dem Sperrbolzen eine Bewegung von der Ruhestellung in die Verrieglungsstellung, bei gleicher Drehrichtung des Zahnrads, ermöglicht. Eine solche Lösung vereinfacht die Steuerung des Motors 9, der nur noch in eine Richtung drehen muss.

Auch andere Ausführungsformen sind im Rahmen des erfindungsgemäßen Konzepts möglich.

So kann es auch vorteilhaft sein, dass die als Rampe ausgeführte Steuerkurve geradlinig verläuft, zum Beispiel dadurch dass die geradlinige Rampe von einer vom Motor über eine Translationsbewegung angetriebene Zahnstange getragen wird. Eine solche Ausführungsform kann besonders interessant sein, wenn nicht nur eine flache sondern auch eine schmale Bauweise gewünscht wird.

Aus der voranstehenden Beschreibung ist ersichtlich, dass durch die erfindungsgemäßen Merkmale eine sehr flache Bauweise erzielt werden kann. Damit kann der Bauraum um die Lenksäule herum noch besser optimiert genutzt werden.

Als weitere Variante kann unter anderem auch vorgesehen werden, dass der Fortsatz nicht am Ende des Sperrbolzen, sondern ein wenig unterhalb oder mittig angebracht ist.

## Patentansprüche

1. Motorisierte Lenhverrieglungseinrichtung (1) für ein Kraftfahrzeug umfassend einen Sperrbolzen (5), der in eine entsprechende Ausnehmung an der Lenkspindel zur Verrieglung des Lenkrads eines Kraftfahrzeugs eingreifen kann und eine, einen Motor (9) umfassende Antriebseinheit (11) um den Sperrbolzen (5) zumindest aus einer die Lenkspindel blockierenden Verrieglungsstellung in eine nicht blockierende Ruhestellung zu überführen, wobei der Sperrbolzen (5) einen seitlich verlaufenden und parallel zum Sperrbolzen endenden, einteilig mit dem Sperrbolzen gefertigten Fortsatz (13) aufweist, **dadurch gekennzeichnet**, der mit einer seitlich zum Sperrbolzen (5) angeordneten und durch den Motor (9) angetriebenen Steuerkurve (21) der Antriebseinheit (11) kooperiert, um den Sperrbolzen (5) durch eine Hubbewegung von der Verrieglungsstellung in die Ruhestellung zu überführen.

2. Motorisierte Lenkverrieglungseinrichtung nach Anspruch 1, **dadurch gekennzeichnet, dass** der Fortsatz (13) als ein U-förmig ausgebildetes Ende des Sperrbolzens (5) ausgeführt ist.

3. Motorisierte Lenkverrieglungseinrichtung nach Anspruch 1 oder 2, **dadurch gekennzeichnet, dass** die Steuerkurve (21) als Rampe ausgeführt ist.

4. Motorisierte Lenkverrieglungseinrichtung nach Anspruch 3, **dadurch gekennzeichnet, dass** die Rampe (21) eine gleichmäßige Steigung aufweist.

5. Motorisierte Lenkverrieglungseinrichtung nach Anspruch 3, **dadurch gekennzeichnet, dass** der Steigungsbereich (29) der Rampe, der das Herausziehen des Sperrbolzens aus der Ausnehmung der Lenkspindel in der Anfangsphase bewirkt, flacher verläuft als die Steigungen der restlichen Rampenbereiche.

6. Motorisierte Lenkverrieglungseinrichtung einem der Ansprüche 3 bis 5, **dadurch gekennzeichnet, dass** die Rampe (21) eine Querneigung zur Unterstützung der seitlichen Führung des Sperrbolzens bei der Aushubbewegung aufweist.

7. Motorisierte Lenkverrieglungseinrichtung einem der Ansprüche 1 bis 6, **dadurch gekennzeichnet, dass** das Ende (23) des Fortsatzes des Sperrbolzens zumindest im Bereich, der im Eingriff mit der Steuerkurve steht, mit einer Reibungskräfte verringernden Kunststoffbeschichtung (28) umgeben ist.

8. Motorisierte Lenkverrieglungseinrichtung einem der Ansprüche 1 bis 7, **dadurch gekennzeichnet, dass** das Ende (23) des Fortsatzes des Sperrbolzens zumindest im Bereich, der im Eingriff mit der Steuerkurve steht, abgerundet ist um Reibungskräfte zu verringern.

9. Motorisierte Lenkverrieglungseinrichtung einem der Ansprüche 1 bis 6, **dadurch gekennzeichnet, dass** das Ende des Schenkels mit einer in einem Lager gehaltenen Kugel oder Rolle ausgeführt ist.

10. Motorisierte Lenkverrieglungseinrichtung einem der Ansprüche 3 bis 9, **dadurch gekennzeichnet, dass** die als Rampe (21) ausgeführte Steuerkurve helixmäßig verläuft.

11. Motorisierte Lenkverrieglungsvorrichtung nach Anspruch 10, **dadurch gekennzeichnet, dass** die Rampe (21) über einen Umfang von weniger als 360° ausgeführt ist.

12. Motorisierte Lenkverrieglungseinrichtung nach einem der Ansprüche 9 bis 11, **dadurch gekennzeichnet, dass** die helixförmige Rampe im Innenbereich eines vom Motor angetriebenen Zahnrads (27) verläuft.

13. Motorisierte Lenkverrieglungseinrichtung nach einem der Ansprüche 10 bis 12, **dadurch gekennzeichnet, dass** die helixförmige Rampe im Innenbereich des Zahnrads und das Zahnrad einteilig ausgeführt sind.

14. Motorisierte Lenkverrieglungseinrichtung nach einem der Ansprüche 10 bis 12, **dadurch gekennzeichnet, dass** die helixförmige Rampe (21) im Innenbereich des Zahnrads als ein Einlegeteil (26) ausgeführt ist, welches in den Innenbereich des Zahnrads eingepasst werden kann.

15. Motorisierte Lenkverrieglungseinrichtung nach einem der Ansprüche 10 bis 14, **dadurch gekennzeichnet, dass** die helixförmige Rampe einen Quersteg (31) aufweist, dessen eine Seite (33) dem Endanschlag der Ruhestellung und dessen andere Seite (35) dem Endanschlag der Verrieglungsstellung entspricht.

16. Motorisierte Lenkverrieglungseinrichtung nach einem der Ansprüche 10 bis 14, **dadurch gekennzeichnet, dass** die helixförmige Rampe einen Bereich mit einer der übrigen Rampe entgegengesetzten Steigung aufweist, die dem Sperrbolzen eine Bewegung von der Ruhestellung in die Verrieglungsstellung, bei gleicher Drehrichtung des Zahnrads, ermöglicht.

17. Motorisierte Lenkverrieglungseinrichtung einem der Ansprüche 3 bis 9, **dadurch gekennzeichnet, dass** die als Rampe ausgeführte Steuerkurve von einer vom Motor über eine Translationsbewegung angetriebene Zahnstange getragen wird.

## Claims

1. Motorised steering lock device (1) for a motor vehicle, comprising a blocking bar (5) which can engage in a corresponding recess of the steering spindle in order to lock the steering wheel of a motor vehicle, and a drive unit (11) including a motor (9) for transferring the blocking bar (5) at least from a locked position which blocks the steering spindle to a non-blocking rest position, the blocking bar (5) having a laterally disposed projection (13) which ends parallel to the blocking bar and is produced integrally with the blocking bar, **characterised in that** the projection (13) cooperates with a control cam (21) of the drive unit (11), which control cam (21) is arranged laterally with respect to the blocking bar (5) and is driven by the motor (9), in order to transfer the blocking bar (5) from the locked position to the rest position by a lifting movement.

2. Motorised steering lock device according to Claim 1, **characterised in that** the projection (13) is configured as a U-shaped end of the blocking bar (5).

3. Motorised steering lock device according to Claim 1 or 2, **characterised in that** the control cam (21) is in the form of a ramp.

4. Motorised steering lock device according to Claim 3, **characterised in that** the ramp (21) has a uniform gradient.

5. Motorised steering lock device according to Claim 3, **characterised in that** the gradient region (29) of the ramp, which effects the retraction of the blocking bar from the recess of the steering spindle in the initial phase, has a less steep configuration than the gradients of the remaining regions of the ramp.

6. Motorised steering lock device according to any one of Claims 3 to 5, **characterised in that** the ramp (21) has a transverse inclination in order to assist the lateral guidance of the blocking bar during the retraction movement.

7. Motorised steering lock device according to any one of Claims 1 to 6, **characterised in that** the end (23) of the projection of the blocking bar is covered, at least in the region which engages with the control cam, by a plastics coating (28) which reduces frictional forces.

8. Motorised steering lock device according to any one of Claims 1 to 7, **characterised in that** the end (23) of the projection is rounded, at least in the region which engages with the control cam, in order to reduce frictional forces.

9. Motorised steering lock device according to any one of Claims 1 to 6, **characterised in that** the end of the limb is configured with a ball or roller retained in a bearing.

10. Motorised steering lock device according to any one of Claims 3 to 9, **characterised in that** the control cam in the form of a ramp (21) follows a helical path.

11. Motorised steering lock device according to Claim 10, **characterised in that** the ramp (21) is formed over a range of less than 360°.

12. Motorised steering lock device according to any one of Claims 9 to 11, **characterised in that** the helical ramp is disposed in the internal region of a gear wheel (27) driven by the motor.

13. Motorised steering lock device according to any one of Claims 10 to 12, **characterised in that** the helical ramp in the internal region of the gear wheel is formed integrally with the gear wheel.

14. Motorised steering lock device according to any one of Claims 10 to 12, **characterised in that** the helical ramp (21) in the internal region of the gear wheel is in the form of an insert (26) which can be fitted into the internal region of the gear wheel.

15. Motorised steering lock device according to any one of Claims 10 to 14, **characterised in that** the helical ramp has a transverse web (31), one side (33) of which corresponds to the end stop of the rest position and the other side (35) of which corresponds to the end stop of the locked position.

16. Motorised steering lock device according to any one of Claims 10 to 14, **characterised in that** the helical ramp has a region with a gradient opposite to that of the rest of the ramp, which allows the blocking bar to execute a movement from the rest position to the locked position with the gear wheel rotating in the same direction.

17. Motorised steering lock device according to any one of Claims 3 to 9, **characterised in that** the control cam in the form of a ramp is carried by a toothed rack driven by the motor in a translational motion.

## Revendications

1. Dispositif de verrouillage de direction motorisé (1) pour un véhicule automobile, comprenant un pêne de verrouillage (5), qui peut s'engager dans un évidement correspondant sur la colonne de direction pour verrouiller le volant de direction d'un véhicule automobile, et une unité d'entraînement (11) comprenant un moteur (9) pour transférer le pêne de verrouillage (5) au moins d'une position de verrouillage bloquant la colonne de direction dans une position de repos non bloquante, le pêne de verrouillage (5) présentant une saillie (13) s'étendant latéralement et se terminant parallèlement au pêne de verrouillage, fabriquée d'une seule pièce avec le pêne de verrouillage, **caractérisé en ce que** la saillie (13) coopère avec une came de commande (21) de l'unité d'entraînement (11) entraînée par le moteur (9) et disposée latéralement par rapport au pêne de verrouillage (5), afin de transférer le pêne de verrouillage (5) par un mouvement de course de la position de verrouillage dans la position de repos.

2. Dispositif de verrouillage de direction motorisé selon la revendication 1, **caractérisé en ce que** la saillie (13) est réalisée sous forme d'une extrémité du pêne de verrouillage (5) en forme de U.

3. Dispositif de verrouillage de direction motorisé selon la revendication 1 ou 2, **caractérisé en ce que** la came de commande (21) est réalisée sous forme de rampe.

4. Dispositif de verrouillage de direction motorisé selon la revendication 3, **caractérisé en ce que** la rampe (21) présente une pente régulière.

5. Dispositif de verrouillage de direction motorisé selon la revendication 3, **caractérisé en ce que** la zone de pente (29) de la rampe, qui provoque le retrait du pêne de verrouillage hors de l'évidement de la colonne de direction dans la phase initiale, est plus plate que les pentes des autres zones de rampe.

6. Dispositif de verrouillage de direction motorisé selon l'une quelconque des revendications 3 à 5, **caractérisé en ce que** la rampe (21) présente une inclinaison transversale pour supporter le guidage latéral du pêne de verrouillage lors du mouvement de sortie de course.

7. Dispositif de verrouillage de direction motorisé selon l'une quelconque des revendications 1 à 6, **caractérisé en ce que** l'extrémité (23) de la saillie du pêne de verrouillage est entourée au moins dans la région qui est en prise avec la came de commande, avec un revêtement de plastique (28) réduisant les forces de friction.

8. Dispositif de verrouillage de direction motorisé selon l'une quelconque des revendications 1 à 7, **caractérisé en ce que** l'extrémité (23) de la saillie du pêne de verrouillage est arrondie au moins dans la région qui est en prise avec la came de commande afin de réduire les forces de friction.

9. Dispositif de verrouillage de direction motorisé selon l'une quelconque des revendications 1 à 6, **caractérisé en ce que** l'extrémité de la branche est réalisée avec une bille ou un rouleau maintenu(e) dans un palier.

10. Dispositif de verrouillage de direction motorisé selon l'une quelconque des revendications 3 à 9, **caractérisé en ce que** la came de commande réalisée sous forme de rampe (21) s'étend en forme d'hélice.

11. Dispositif de verrouillage de direction motorisé selon la revendication 10, **caractérisé en ce que** la rampe (21) est réalisée sur une circonférence inférieure à 360°.

12. Dispositif de verrouillage de direction motorisé selon l'une quelconque des revendications 9 à 11, **caractérisé en ce que** la rampe hélicoïdale s'étend dans la région intérieure d'une roue dentée (27) entraînée par le moteur.

13. Dispositif de verrouillage de direction motorisé selon l'une quelconque des revendications 10 à 12, **caractérisé en ce que** la rampe hélicoïdale dans la région intérieure de la roue dentée et la roue dentée sont réalisées d'une seule pièce.

14. Dispositif de verrouillage de direction motorisé selon l'une quelconque des revendications 10 à 12, **caractérisé en ce que** la rampe hélicoïdale (21) est réalisée dans la région intérieure de la roue dentée sous forme de pièce d'insertion (26) qui peut être adaptée dans la région intérieure de la roue dentée.

15. Dispositif de verrouillage de direction motorisé selon l'une quelconque des revendications 10 à 14, **caractérisé en ce que** la rampe hélicoïdale présente une nervure transversale (31) dont un côté (33) correspond à la butée de fin de course de la position de repos et dont l'autre côté (35) correspond à la butée de fin de course de la position de verrouillage,

16. Dispositif de verrouillage de direction motorisé selon l'une quelconque des revendications 10 à 14, **caractérisé en ce que** la rampe hélicoïdale présente une région avec une pente opposée au reste de la rampe, qui permet au pêne de verrouillage de se déplacer de la position de repos dans la position de verrouillage pour un même sens de rotation de la roue dentée.

17. Dispositif de verrouillage de direction motorisé selon l'une quelconque des revendications 3 à 9, **caractérisé en ce que** la came de commande réalisée sous forme de rampe est portée par une crémaillère entraînée par le moteur en un mouvement de translation.
